# EUROPEAN PATENT APPLICATION

(11) **EP 3 514 024 A1**
(43) Date of publication of application: **24.07.2019**
(21) Application number: 19153224.1
(22) Date of filing: 23.01.2019
(51) Int. Cl.: B60S 1/34, B60S 1/38, B60S 1/40

(54) **CHATTERING PREVENTION STRUCTURE AND WIPER INCLUDING THE SAME**

(30) Priority: 23.01.2018 KR 20180008104
(71) Applicant: KB Wiper Systems Co., Ltd., Daegu 42705 (KR)
(72) Inventor: An, Jae Hyuck, 43008 Daegu (KR); Park, Jin Wan, 42965 Daegu (KR); Kim, Kwan Hee, 41842 Daegu (KR)
(74) Representative: Jakelski & Althoff Patentanwälte PartG mbB

(57) **Abstract**

Disclosed is a chattering prevention structure for a wiper which includes a wiper arm (100), a wiper blade (300), and an adaptor (200) connecting the wiper arm and the wiper blade. The chattering prevention structure includes: a body (400) which is coupled to the adaptor (200) and of which an upper one side has an opening (402) for receiving a portion of the adaptor (200); and a catching portion (424) which is formed on one lower side of the body and holds the wiper blade (300).

## Description

### BACKGROUND

### Field

The present disclosure relates to a chattering prevention structure and a wiper including the same.

### Description of the Related Art

In general, a wiper is installed on the windshield or rear glass of a vehicle. The wiper which plays an important role in obtaining user's visibility by removing snow or rainwater in bad snowy or rainy weather and or by removing impurities on the surface the glass is one of safety devices of the vehicle.

Such a wiper is composed of a wiper arm which performs a reciprocating motion by the driving force of a motor and of a wiper blade which is coupled to the wiper arm and wipes the glass surface. The wiper blade performs a repetitive reciprocating motion in a fan shape as a motor drives a link apparatus connected by the wiper arm. The wiper arm provides pressure which causes the wiper blade to closely contact with the glass in order to remove impurities such as snow, rain, muddy water, etc., on the glass surface.

During the operation of the wiper, due to friction between the glass surface of the vehicle and a rubber-made wiper blade, chattering occurs in which the blade vibrates, so that impurities attached to the glass surface cannot be effectively removed.

For the purpose of solving such a problem, there has been known a conventional technology for fixing a wiper arm and a wiper blade. For example, an apparatus for chattering-prevention for wiper of vehicles has been disclosed in the publication of Korean Patent Application No. 10-2016-0095385. The apparatus for chattering-prevention for wiper of vehicles includes an arm fixing structure which is installed and fixed to one end of the wiper arm; a blade holder which is coupled to one end of the wiper blade in response to the arm fixing structure; and a retainer which connects the arm fixing structure and the blade holder and restricts a gap between the arm fixing structure and the blade holder.

In the apparatus for chattering-prevention, the arm fixing structure, the blade holder, and the retainer are each implemented as separate members. Since the apparatus for chattering-prevention is fixed to the wiper arm by a fastening means, it is complicated to assemble the apparatus for chattering-prevention and it is inconvenient to fix the apparatus for chattering-prevention to the wiper arm. Moreover, in the above conventional technology, the wiper blade is fixed to the wiper arm by means of the apparatus for chattering-prevention. As a result, the operation of the wiper blade is dependent on the movement of the wiper arm, and thus, rather, further chattering occurs.

### SUMMARY

One embodiment is a chattering prevention structure for a wiper which includes a wiper arm, a wiper blade, and an adaptor connecting the wiper arm and the wiper blade. The chattering prevention structure includes: a body which is coupled to the adaptor and of which an upper one side has an opening for receiving a portion of the adaptor; and a catching portion which is formed on one lower side of the body and holds the wiper blade.

Another embodiment is a wiper including a wiper arm and a wiper blade. The wiper includes: an adaptor which is assembled with the wiper blade, is coupled to the wiper arm, and has a tongue formed to extend vertically from an end thereof; and a chattering prevention structure for a wiper. The chattering prevention structure for a wiper includes: a body of which an upper one side has an opening for receiving the tongue of the adaptor; and a catching portion which is formed on one lower side of the body and holds the wiper blade.

The catching portion may include: a first catching portion which extends from a lower portion of a side opposite to the side where the opening of the body is formed; and a second catching portion which extends from the body in response to the first catching portion.

At least one first rib may be formed in the opening.

The first rib may have any one of a semicircular columnar shape, a triangular columnar shape, and a thin quadrangular columnar shape.

At least one of the first catching portion and the second catching portion may have at least one second rib on an inner surface thereof.

Inner surfaces of the first catching portion and the second catching portion may be formed in a shape corresponding to a cross sectional shape of the wiper blade.

A thickness of the body may be reduced from one end thereof toward the other end thereof.

The body may have a recess on at least one side thereof.

The opening may be a through-hole.

### BRIEF DESCRIPTION OF THE DRAWINGS

Fig. 1 is a perspective view of a wiper on which a chattering prevention structure is mounted according to an embodiment of the present invention;
Fig. 2 is a perspective view of an adaptor according to the embodiment of the present invention;
   A perspective view of the chattering prevention structure according to the embodiment of the present invention is shown in (a) of Fig. 3;
   A side view of the chattering prevention structure according to the embodiment of the present invention is shown in (b) of Fig. 3;
   A front view of the chattering prevention structure according to the embodiment of the present invention is shown in (a) of Fig. 4;
   A rear view of the chattering prevention structure according to the embodiment of the present invention is shown in (b) of Fig. 4;

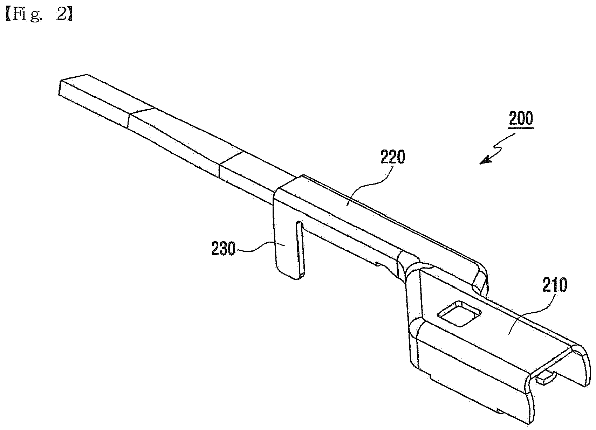

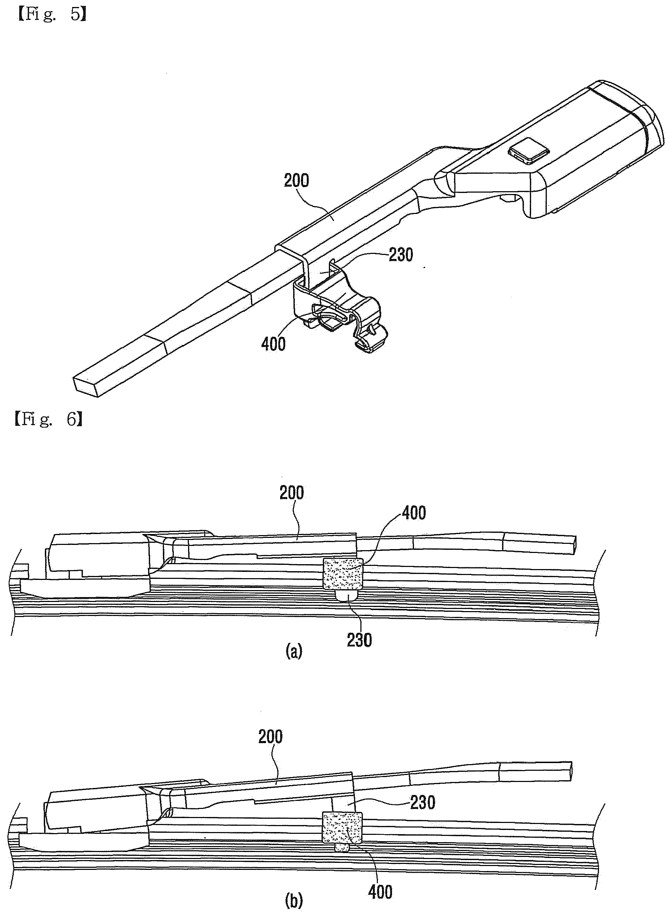

Fig. 5 is a perspective view showing that the chattering prevention structure and the adaptor of Fig. 2 have been coupled; and

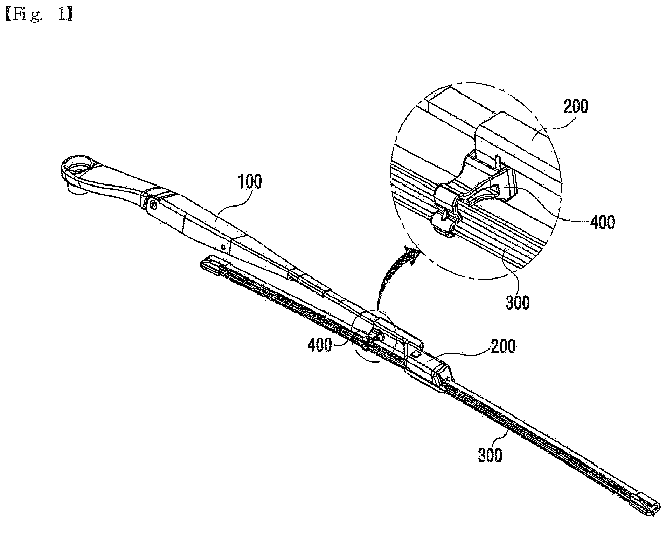

Fig. 6 is a view showing a wiper arm and a wiper blade according to the chattering prevention structure when the wiper of Fig. 1 is operated.

### DETAILED DESCRIPTION

Embodiments of the present invention will be described in more detail with reference to the accompanying drawings. In the components of the present invention, detailed descriptions of what can be clearly understood and easily carried into practice through prior art by those skilled in the art will be omitted to avoid making the subject matter of the present invention unclear.

Fig. 1 is a perspective view of a wiper on which a chattering prevention structure is mounted according to an embodiment of the present invention;
Referring to Fig. 1, a chattering prevention structure 400 is provided in a wiper of a vehicle and prevents chattering of a wiper blade 300.

The wiper wipes dust or rainwater on the windshield or rear glass of the vehicle. The wiper includes a wiper arm 100, the wiper blade 300 which is connected to the wiper arm 100, and an adaptor 200 which is assembled with the wiper blade 300 and is coupled to the wiper arm 100.

The wiper blade 300 wipes dust or rainwater on the windshield or rear glass of the vehicle. The wiper blade 300 is connected to the wiper arm 100 through the adaptor 200. The wiper arm 100 is connected to the center of the wiper blade 300 in order that the wiper blade 300 wipes the windshield or rear glass of the vehicle.

The wiper blade 300 and the wiper arm 100 are restrained to each other by the chattering prevention structure 400.

In the past, there was proposed a configuration in which at an end of the wiper blade 300 the chattering prevention structure 400 fixes the wiper blade 300 and the wiper arm 100. This is because the farther the chattering prevention structure 400 is mounted from the hinge center, i.e., the center of the wiper blade 300, the greater an effect of preventing the vibration of the wiper blade 300 becomes.

Meanwhile, in the embodiment of the present invention, the chattering prevention structure 400 is mounted on the wiper blade 300 at a position not far from the center of the wiper blade 300.

The inventor of the present invention has found that, when the wiper blade is a flat type, an optimal position for chattering prevention is a predetermined position between the center of the wiper blade 300 and the end of the wiper blade 300.

The chattering prevention structure 400 is mounted on the wiper blade 300 at a predetermined position between the hinge center, i.e., the center of the wiper blade 300 and the end of the wiper blade 300.

Also, the end of the adaptor 200, which is coupled to the chattering prevention structure 400, is extended by a predetermined distance from a main body of the adaptor 200. The predetermined distance may be from the center of the wiper blade 300 to a position suitable for the chattering prevention structure 400 to restrain the wiper blade 300 and the wiper arm 100. The extended end of the adaptor 200 may be coupled to the chattering prevention structure 400.

The chattering prevention structure 400 has an opening for receiving a portion of the adaptor 200 in order that the chattering prevention structure 400 is coupled to the end of the adaptor 200.

Fig. 2 is a perspective view of the adaptor according to an embodiment of the present invention.

Referring to Fig. 2, the adaptor 200 is assembled with the wiper blade 300 and is coupled to the wiper arm 100.

The adaptor 200 includes a main body 210 which is coupled to the wiper blade 300, an extension portion 220 which extends from the main body 210, and a tongue 230 which is formed to protrude from the extension portion 220 and is inserted into the opening 402 of the chattering prevention structure 400.

The extension portion 220 of the adaptor 200 extends from the main body 210 in the longitudinal direction thereof. That is, the extension portion 220 of the adaptor 200 extends along the wiper arm 100.

The tongue 230 of the adaptor 200 may be formed to extend vertically from the end of the extension portion 220. The embodiment of the present invention is not limited to this. The tongue 230 of the adaptor 200 can protrude from any position of the extension portion 220. This can be changed according to a design condition, etc., by a skilled person in the art.

The tongue 230 is inserted into the opening of the chattering prevention structure 400, thereby causing the wiper blade 300 and the wiper arm 100 to restrain each other within a predetermined distance. The tongue 230 of the adaptor 200 is inserted into the opening 402 and moves within the opening 402. A first rib 404 is, as described above, formed in the portion of the chattering prevention structure 400, in which the opening 402 is formed.

When the tongue 230 of the adaptor 200 is inserted into the opening 402 and comes in contact with the chattering prevention structure 400, the first rib 404 causes the tongue 230 and the chattering prevention structure 400 to be in line contact with or in point contact with each other. If the tongue 230 of the adaptor 200 comes in surface contact with the portions of the chattering prevention structure 400 which define the opening 402, a contact resistance is increased and the tongue 230 cannot move smoothly within the opening 402.

According to the embodiment of the present invention, since the tongue 230 contacts the first rib 404 within the opening 402, the contact resistance is reduced. As a result, the tongue 230 can move smoothly within the opening 402 in a vertical direction in accordance with the movement of the wiper arm 100. The first one or more ribs 404 may be provided.

At a position corresponding to the end of the extension portion 220 of the adaptor 200 instead of at the end of the wiper blade 300, the chattering prevention structure 400 restrains the wiper blade 300 and the wiper arm 100. Specifically, the tongue 230 protruding from the end of the extension portion 220 is coupled to the opening of the chattering prevention structure 400 and restrains the wiper arm 100 of the wiper blade 300 at a position corresponding to the end of the extension portion 220 of the adaptor 200.

As such, when the wiper blade 300 and the wiper arm 100 are restrained to each other at a position corresponding to the end of the extension portion 220 of the adaptor 200, the wiper blade 300 is able to wipe the windshield or rear window of the vehicle without chattering.

Stated another way, the chattering prevention structure 400 restrains the wiper blade 300 and the wiper arm 100 at the end of the adaptor 200 such that they are within a certain distance.

As such, the chattering prevention structure 400 restrains the gap between the wiper blade 300 and the wiper arm 100 within a predetermined distance, thereby preventing the occurrence of chattering when the wiper is operated on the windshield or rear window of the vehicle.

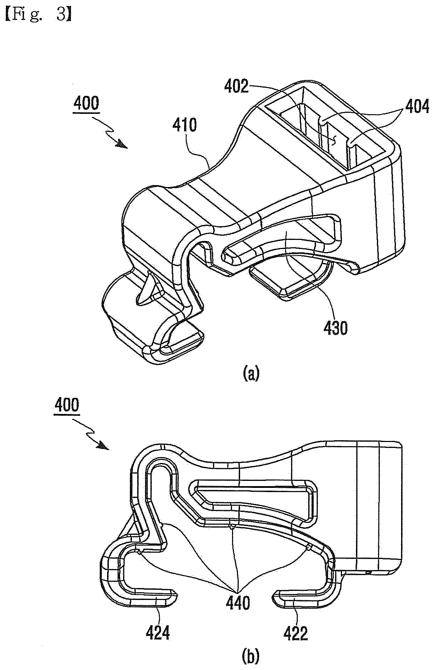

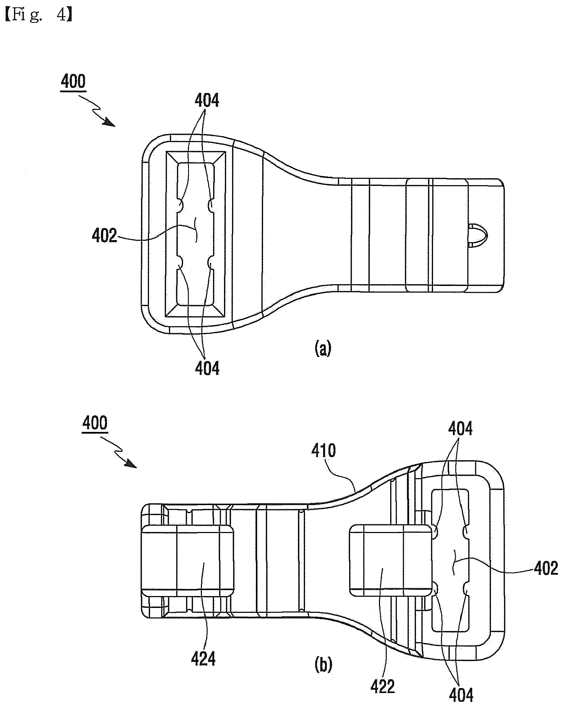

Hereinafter, the chattering prevention structure 400 will be described with reference to Figs. 3 and 4.

Figs. 3 and 4 show the chattering prevention structure according to the embodiment of the present invention. A perspective view of the chattering prevention structure according to the embodiment of the present invention is shown in (a) of Fig. 3. A side view of the chattering prevention structure according to the embodiment of the present invention is shown in (b) of Fig. 3. A front view of the chattering prevention structure according to the embodiment of the present invention is shown in (a) of Fig. 4. A rear view of the chattering prevention structure according to the embodiment of the present invention is shown in (b) of Fig. 4.

Referring to Figs. 3 and 4, the chattering prevention structure 400 includes a body 410 an upper one side of which has the opening 402 for receiving a portion of the adaptor 200, i.e., the tongue 230, and a catching portion which is formed on one lower side of the body and holds the wiper blade 300.

Also, the catching portion includes a first catching portion 424 which extends from the lower portion of a side opposite to the side where the opening 402 of the body 410 is formed, and a second catching portion 422 which extends from the body 410 in response to the first catching portion 424.

The opening 402 is a through-hole. At least one first rib 404 is formed in a portion of the body in which the opening 402 is formed. That is, at least one first rib 404 is formed in the opening.

The first catching portion 424 and the second catching portion 422 allow the chattering prevention structure 400 to be fixed to the wiper blade 300.

The opening 402 in which the tongue 230 of the adapter 200 is received is formed in the upper one side of the body 410. Since the tongue 230 of the adapter 200 is inserted into the opening 402, the opening 402 may be formed to correspond to the shape of the tongue 230 of the adapter 200, which is inserted into the opening 402. According to the embodiment, since the tongue 230 of the adapter 200, which is inserted into the opening 402, has approximately a rectangular columnar shape, the opening 402 may also have a rectangular columnar shape. It is apparent to those skilled in the art that the shape of the opening 402 is not limited to the rectangular columnar shape.

At least one first rib 404 is formed in a portion of the body 410 in which the opening 402 is formed. The first rib 404 is formed, for example, in the shape of a semicircular column in the longitudinal direction of the rectangular columnar opening 402. According to another embodiment, the first rib 404 may have a triangular columnar shape or a thin quadrangular columnar shape.

The embodiments of the present invention are not limited to the configuration in which the first rib 404 has a semicircular columnar shape, a triangular columnar shape, or a thin quadrangular columnar shape. It is clear to those skilled in the art that any shape capable of inducing surface contact to line contact or point contact can be applied.

When a portion of the adaptor 200, i.e., the tongue 230 of the adaptor is inserted into the opening 402, the rib 404 enables the tongue 230 of the adaptor to be maintained within the opening 402 and to move smoothly within the opening 402. In other words, the first rib 404 supports the tongue 230 of the adaptor 200 inserted into the opening 402 and facilitates the tongue 230 of the adaptor 200 to smoothly move within the opening 402 in the insertion direction.

The first catching portion 424 is formed to extend from the lower portion of the side opposite to the side where the opening 402 of the body 410 is formed. Specifically, the first catching portion 424 extends in the width direction of the body 410 from the side opposite to the side where the opening 402 of the body 410 is formed. The first catching portion 424 has a hook shape at its end. Accordingly, the first catching portion 424 has a hook-shaped cross section so as to enclose one end of the wiper blade 300. The second catching portion 422, together with the first catching portion 424, is formed to enclose the other end of the wiper blade 300. That is, the second catching part 422 is formed to extend from the body 410 in the width direction of the body 410 at a position corresponding to the first catching part 424. The second catching portion 422 also has a hook-shaped cross section.

The first catching portion 424 and the second catching portion 422 may have a shape corresponding to the width direction cross section of the wiper blade 300. That is, a space formed by the first catching portion 424 and the second catching portion 422 may correspond to the width direction cross section of the wiper blade 300. In other words, the inner surfaces of the first catching portion 424 and the second catching portion 422 are formed in a shape corresponding to the cross sectional shape of the wiper blade 300.

Specifically, the first catching portion 424 may be divided into an extension portion connected to the body 410 and a hook portion enclosing the wiper blade 300. The extension portion of the first catching portion 424 extends from the body 410 to form a U-shape. This extension portion allows a gap between the first catching portion 424 and the body 410 to be easily increased. The hook portion extends from the end of the extension portion so as to have a hook shape.

When the chattering prevention structure 400 is mounted on the wiper blade 300, the first catching portion 424 and the second catching portion 422 enclose the wiper blade 300, so that the chattering prevention structure 400 is caught by the wiper blade 300.

Meanwhile, at least one of the first catching portion 424 and the second catching portion 422 may have at least one second rib 440 on the inner surface thereof. When the first catching portion 424 or the second catching portion 422 encloses the wiper blade 300, the wiper blade 300 comes in contact with and is pressed by the first catching portion 424 or the second catching portion 422 and the second rib 440 makes it easier for the position of the wiper blade 300 to be fixed. The width or thickness of the body 410 may be reduced from one end, for example, one end where the opening 402 is formed toward the other end.

According to the embodiment, the body 410 may be configured such that a gap between the first catching portion 424 and the second catching portion 422 is increased. According to the embodiment, when the chattering prevention structure 400 is inserted into the wiper blade 300, the gap between the first catching portion 424 and the second catching portion 422 is increased, that is to say, the first catching portion 424 moves elastically and is caught by the wiper blade 300. In other words, the first catching portion 424 is easily deformed and is easily caught in the wiper blade 300. In this case, the first catching portion 424 returns to its original shape after being inserted into the wiper blade 300. The body 410 may be formed of an elastic material such that the first catching portion 424 of the body 410 can be elastically moved.

According to another embodiment, the body 410 may be formed such that the gap between the first catching portion 424 and the second catching portion 422 is not increased. According to the embodiment, when the chattering prevention structure 400 is inserted into the wiper blade 300, an end cap which is coupled to the end of the wiper blade 300 is removed and the chattering prevention structure 400 is moved from the end of the wiper blade 300 to a predetermined position.

In addition, the body 410 may have recesses 430 on both sides thereof in order to increase the flexibility of the body 410. Also, since the volume of the body 410 is reduced by the recess 430, the shock resistance of the chattering prevention structure 400 can be improved.

Fig. 5 is a perspective view showing that the chattering prevention structure and the adaptor of Fig. 2 have been coupled.

Referring to Fig. 5, as described above, the adapter 200 is assembled with wiper blade 300 and is coupled to the wiper arm 100.

The tongue 230 of the adapter 200 is inserted into the opening 402 of the chattering prevention structure 400, so that the wiper blade 300 and the wiper arm 100 are restrained to each other within a predetermined distance.

Also, the tongue 230 of the adapter 200 is inserted into the opening 402 and moves within the opening 402. The tongue 230 comes in contact with the first rib 404 because the first rib 404 is, as described above, formed in the portion of the chattering prevention structure 400, in which the opening 402 is formed. This prevents the adaptor 200 from being separated from the chattering prevention structure 400. As described above, the first rib 404 may be formed to have a shape capable of inducing surface contact to linear contact or point contact.

Fig. 6 is a view showing the wiper arm and the wiper blade according to the chattering prevention structure when the wiper of Fig. 1 is operated.

Referring to Fig. 6, the first and second catching portions 424 and 422 of the chattering prevention structure 400 are fixed to the wiper blade. Also, the tongue 230 of the adapter 200 is inserted into the opening 402 of the chattering prevention structure 400. The tongue 230 of the adapter 200 can move within a predetermined distance while being inserted into the opening 402.

Accordingly, when the wiper is operated with a portion of the adapter 200 inserted into the opening 402, the adapter 200 can move within the opening 402 without separating from the chattering prevention structure 400 because the tongue 230 and the first rib 404 of the chattering prevention structure 400 are in contact with each other.

In other words, the tongue 230 of the adapter 200 is inserted into the opening 402 of the chattering prevention structure 400 and is not fixed to the chattering prevention structure 400. Accordingly, an angle of the chattering prevention structure 400 relative to the adapter 200 can be changed according to the movement of the wiper blade 300, which is advantageous for wiping the glass of the vehicle during the wiping operation.

The chattering prevention structure can prevent the chattering when operating the wiper and reduce the consequent noise.

In addition, there is an advantage that the chattering prevention structure is formed as one member, so that the number of parts can be minimized.

The features, structures and effects and the like described in the embodiments are included in at least one embodiment of the present invention and are not necessarily limited to one embodiment. Furthermore, the features, structures, effects and the like provided in each embodiment can be combined or modified in other embodiments by those skilled in the art to which the embodiments belong. Therefore, contents related to the combination and modification should be construed to be included in the scope of the present invention.

Although the embodiments of the present invention were described above, these are just examples and do not limit the present invention. Further, the present invention may be changed and modified in various ways, without departing from the essential features of the present invention, by those skilled in the art. That is, the components described in detail in the embodiments of the present invention may be modified. Further, differences due to the modification and application should be construed as being included in the scope and spirit of the present invention, which is described in the accompanying claims.

## Claims

1. A chattering prevention structure for a wiper which comprises a wiper arm, a wiper blade, and an adaptor connecting the wiper arm and the wiper blade, the chattering prevention structure comprising:
a body which is coupled to the adaptor and of which an upper one side has an opening for receiving a portion of the adaptor; and
a catching portion which is formed on one lower side of the body and holds the wiper blade.

2. The chattering prevention structure for a wiper of claim 1, wherein the catching portion comprises:
a first catching portion which extends from a lower portion of a side opposite to the side where the opening of the body is formed; and
a second catching portion which extends from the body in response to the first catching portion.

3. The chattering prevention structure for a wiper of claim 1, wherein at least one first rib is formed in the opening.

4. The chattering prevention structure for a wiper of claim 1, wherein the first rib has any one of a semicircular columnar shape, a triangular columnar shape, and a thin quadrangular columnar shape.

5. The chattering prevention structure for a wiper of claim 2, wherein at least one of the first catching portion and the second catching portion has at least one second rib on an inner surface thereof.

6. The chattering prevention structure for a wiper of claim 2, wherein inner surfaces of the first catching portion and the second catching portion are formed in a shape corresponding to a cross sectional shape of the wiper blade.

7. The chattering prevention structure for a wiper of any one of claims 1 to 6, wherein a thickness of the body is reduced from one end thereof toward the other end thereof.

8. The chattering prevention structure for a wiper of any one of claims 1 to 6, wherein the body has a recess on at least one side thereof.

9. The chattering prevention structure for a wiper of any one of claims 1 to 6, wherein the opening is a through-hole.

10. A wiper comprising a wiper arm and a wiper blade, the wiper comprising:
an adaptor which is assembled with the wiper blade, is coupled to the wiper arm, and has a tongue formed to extend vertically from an end thereof; and
a chattering prevention structure for a wiper,
wherein the chattering prevention structure for a wiper comprises:
a body of which an upper one side has an opening for receiving the tongue of the adaptor; and
a catching portion which is formed on one lower side of the body and holds the wiper blade.

11. The wiper of claim 10, wherein the catching portion comprises:
a first catching portion which extends from a lower portion of a side opposite to the side where the opening of the body is formed; and
a second catching portion which extends from the body in response to the first catching portion.

12. The wiper of claim 10, wherein at least one first rib is formed in the opening.

13. The wiper of claim 12, wherein the first rib has any one of a semicircular columnar shape, a triangular columnar shape, and a thin quadrangular columnar shape.

14. The wiper of claim 11, wherein at least one of the first catching portion and the second catching portion has at least one second rib on an inner surface thereof.

15. The wiper of claim 11, wherein inner surfaces of the first catching portion and the second catching portion are formed in a shape corresponding to a cross sectional shape of the wiper blade.

16. The wiper of any one of claims 10 to 15, wherein a thickness of the body is reduced from one end thereof toward the other end thereof.

17. The wiper of any one of claims 10 to 15, wherein the body has a recess on at least one side thereof.

18. The wiper of any one of claims 10 to 15, wherein the opening is a through-hole.
